# EUROPEAN PATENT APPLICATION

(11) **EP 3 984 800 A1**
(43) Date of publication of application: **20.04.2022**
(21) Application number: 20202102.8
(22) Date of filing: 15.10.2020
(51) Int. Cl.: B60K 15/05

(54) **FLAP ASSEMBLY**

(71) Applicant: Aptiv Technologies Limited, St. Michael (BB)
(72) Inventor: ARCHITEKT, Rafal, 28-133 Pacanów (PL); GRUDZIEN, Grzegorz, 30-376 Kraków (PL); KLOCH, Konrad, 31-553 Kraków (PL)
(74) Representative: Manitz Finsterwald Patent- und Rechtsanwaltspartnerschaft mbB

(57) **Abstract**

Flap assembly, comprising a flap rotatable about a first axis between a closed position and an open end position, a toggle joint mechanism comprising a body rotatable about a second axis which is parallel to the first axis, and a transmission rod rotationally coupling the body and the flap, and a spring biasing the toggle joint mechanism in the closed position, wherein the toggle joint mechanism arrests the flap in its open end position.

## Description

### FIELD

The present disclosure relates to a flap assembly comprising a flap rotatable about a first axis between a closed position and an open end position.

### BACKGROUND

Flap assemblies comprising flaps for covering a fuel tank filler and/or a charging terminal are well known. In the closed position, the flap not only covers the tank filler and/or the charging terminal from an aesthetic point of view, but also protects the tank filler and/or the charging terminal from external influences, such as moisture or dirt.

A flap may not only be used to entirely cover the tank filler and/or the charging terminal but also to cover parts thereof. Such kind of configuration is of particular interest if the charging terminal comprises one charging terminal for alternating current (AC) and one charging terminal for direct current (DC). A flap may then be used to cover only one of the respective charging terminals. Alternatively each of the charging terminals, and optionally also the tank filler, may be covered by separate flaps. In either case such kind of flap or flaps may be used in addition to a flap for entirely covering the charging terminal and/or tank filler.

In order to reliably keep the flap in either the closed position or the open end position, a locking mechanism may be provided which commonly interacts with the flap mechanism by means of form-locking and/or friction-locking. However, such kind of locking mechanism may be prone to wear thereby rendering the functionality of the flap to be more vulnerable to operating failure. In the worst case, the flap cannot be firmly held in the closed position or the open end position. In such situation, the flap might undesirably rattle or the flap might no longer protect the tank filler and/or charging terminal against external influences. Additionally, since a locking device requires a certain strength to firmly hold the flap, the locking device must be sufficiently dimensioned, so that a common locking mechanism cannot be miniaturized.

Therefore, there is a demand for a flap mechanism that overcomes the above-mentioned drawbacks. In particular, there is a need for a long-term durable flap assembly that reliably keeps a flap in either a closed position or an open end position.

These demands are satisfied by a flap mechanism comprising the features of claim 1.

### SUMMARY

The present disclosure is directed at a flap assembly for a fuel tank filler and/or charging terminal, which comprises a flap rotatable about a first axis between a closed position and an open end position, a toggle joint mechanism comprising a body rotatable about a second axis which is parallel to the first axis, and a transmission rod rotationally coupling the body and the flap, and a spring biasing the toggle joint mechanism in the closed position, wherein the toggle joint mechanism arrests the flap in its open end position.

The functionality of the flap assembly is based on the general idea that the flap may be securely arrested in the open end position upon overcoming a dead center of the toggle joint mechanism as the flap is rotated from the closed position into the open end position, whereas a spring force of the spring turns the flap into its closed position as the dead center of the toggle joint mechanism is overcome during a rotation of the flap from the open end position into the closed position. As the flap is held in either its closed position or open end position by merely the forces acting in the toggle joint mechanism or the force of the spring, no additional locking mechanism based on form-locking and/or friction locking is required, which allows for an increase in the overall life-time of the flap assembly. Furthermore, since no locking mechanism is required, the flap assembly comprises fewer parts, thereby making the overall size of the flap assembly much smaller and the assembly thereof much easier.

According to an embodiment, the transmission rod is eccentrically hinged to the flap with respect to the first axis and is eccentrically hinged to the body with respect to the second axis. Such kind of configuration allows for an efficient transmission of a rotational movement between the flap and the body by means of the transmission rod. It is to be mentioned, that until reaching the dead center, the flap and the body rotate in the same sense, when the flap is rotated between the open end positon and the closed position or the closed position and the open end position.

In order to hinge the transmission rod to the flap and the body, according to an embodiment, the transmission rod comprises a first mounting cavity configured to receive a protrusion formed at the flap and a second mounting cavity configured to receive a protrusion formed at the body.

Each of the protrusions formed at the flap and the body may define a respective pivot point. According to an embodiment, in the open end position of the flap, the pivot point of the flap is arranged on one side of a plane comprising the first axis and the second axis and the pivot point of the body is arranged on the other side of that plane, whereas in the closed end position of the flap, the pivot point of the flap and the pivot point of the body are arranged on the same side of the plane. By bringing the pivot point of the flap on the same side of the plane as the pivot point of the body, the spring force of the spring provides torque to rotate the body and the flap connected thereto towards the closed position.

According to an embodiment, in the open end position, a distance between the pivot point of the flap and the plane is smaller than a distance between the pivot point of the body and the plane. Such kind of configuration allows, upon a slight impulse acting on the flap towards the closed position, for an easy closing of the flap, because the small distance between the pivot point of the flap and the plane may easily be overcome. The impulse into the closed position may be released by retracting the fuel pump nozzle or the charging gun after filling the tank or charging the battery.

A movement of the pivot point of the flap with respect to the pivot point of the body from the same side of the plane to the opposite side thereof is possible, if the transmission rod intersects the first axis when the flap is rotated from the closed position into its open end position. In order to allow the transmission rod to intersect the first axis, the flap may comprise a flap shaft defining the first axis, with the flap shaft comprising a recess for accommodating a part of the transmission rod and with the first axis extending through the recess. Preferably, the recess is oriented in a plane arranged at least approximately perpendicular to the first axis.

In order to easily connect the transmission rod to either one of the protrusions, according to an embodiment, at least one of the first mounting cavity and the second mounting cavity forms a hook or has a slope of a keyhole. The corresponding other mounting cavity may have a circular slope, in particular if the corresponding protrusion has a circular cross-sectional shape. It is to be understood, that the first mounting cavity as well as the second mounting cavity may both form a hook or may both have a slope of a keyhole. Furthermore, one mounting cavity may form a hook whereas the other mounting cavity may have a slope of a keyhole.

According to an embodiment, the transmission rod is snap-fitted onto the flap and/or the body, which may in particular be facilitated by the first mounting cavity and/or second mounting cavity forming a hook. Snap-fitting the transmission rod onto the flap and/or the body allows for an easy and cost efficient assembly.

According to an embodiment, the body comprises a housing for accommodating the spring, in particular the body may comprise a hollow cylindrical section having a seat for a leg of the spring. Accommodating the spring in the housing facilitates a better protection of the spring against dirt and moisture, thereby further increasing the overall life-time of the flap assembly.

According to an embodiment, a damping member is provided for damping a rotational movement of the flap, with the damping member in particular surrounding a shaft of the flap. The damping member enables a soft and silent closing of the flap. Furthermore, the flap will not be impaired due to a fast undamped closing movement of the flap.

In order to precisely define the closed position of the flap, the flap may comprise a protrusion for stopping the flap in its closed position, with the protrusion resting at a stop when the flap is in its closed position.

According to an embodiment, the flap assembly is easily assembled if the flap and the body are snap-fitted into a base.

The disclosure is also directed at a flap system comprising a flap assembly as described in the preceding sections and a receptacle configured to receive the flap assembly, wherein the spring is biased upon inserting, in particular snap-fitting, the flap assembly into the receptacle. The receptacle may comprise a ramp for receiving a leg of the spring as the flap assembly is inserted into the receptacle.

The disclosure also relates to a method for assembling a flap system comprising a flap assembly as described beforehand. The method comprises the steps of:
- providing a base of the flap assembly,
- snap-fitting a flap rotatable about a first axis between a closed position and an open end position into the base,
- connecting a spring to a body rotatable about a second axis,
- snap-fitting the body comprising the spring into the base.

According to an embodiment, the method further comprises the steps of:
- providing a receptacle configured to receive the flap assembly,
- inserting, in particular snap-fitting, the flap assembly into the receptacle, thereby biasing the spring such that the spring biases the flap in the closed position.

### DRAWINGS

Exemplary embodiments and functions of the present disclosure are described herein in conjunction with the following drawings, wherein schematically:
- Fig. 1: is a perspective exploded view of a flap assembly according to an embodiment of the present disclosure;
- Fig. 2: is a perspective view of an assembled flap system comprising the flap assembly of Fig. 1;
- Fig. 3: is a cross-sectional view of the assembled flap assembly of Fig. 1, with the flap in an open end position;
- Fig. 4: is a cross-sectional view of the assembled flap assembly of Fig. 1, with the flap in a closed position;
- Fig. 5: is a perspective detail view of an assembly step of a body and a spring of the flap assembly of Fig. 1;
- Fig. 6: is a perspective detail view of an assembly step of a flap and a damping member of the flap assembly of Fig. 1;
- Fig. 7: is a perspective detail view of an assembly step of the flap of Fig. 6 with a transmission rod;
- Fig. 8: is a perspective detail view of an assembly step of the flap of Fig. 7 and a base;
- Fig. 9: is a perspective detail view of an assembly step of the flap of Fig. 8 and the body of Fig. 5; and
- Fig. 10: is a detail of a side-view of an assembly step for connecting the assembled flap assembly of Fig. 1 into a receptacle to form the flap system of Fig. 2.

### DETAILED DESCRIPTION

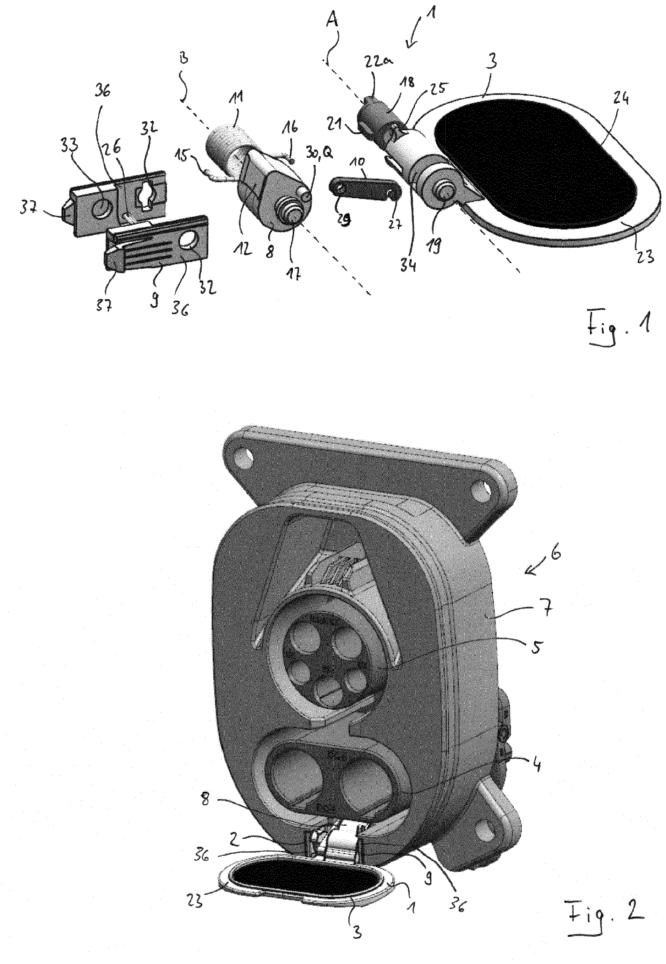

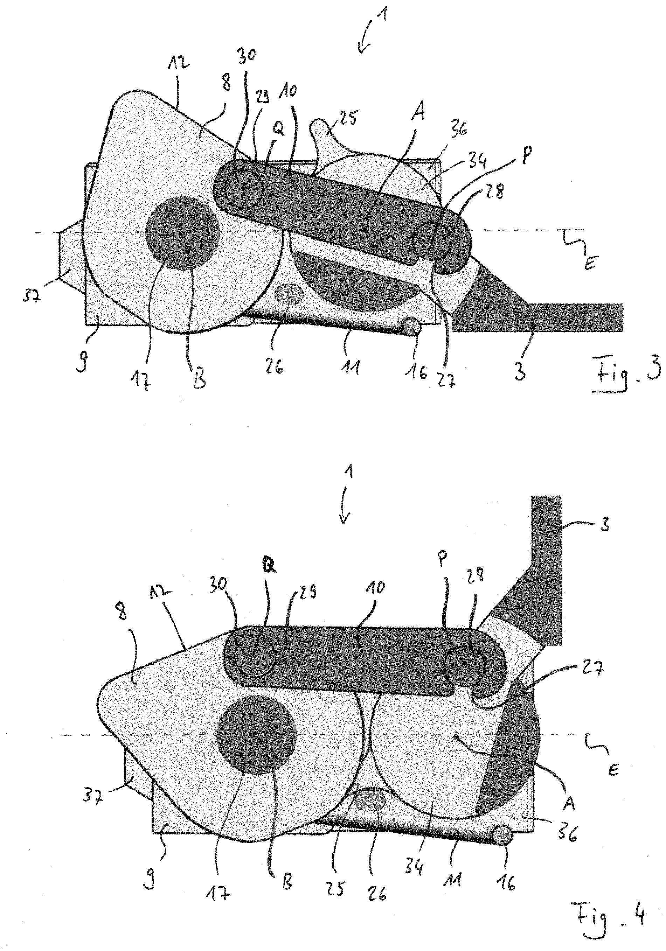

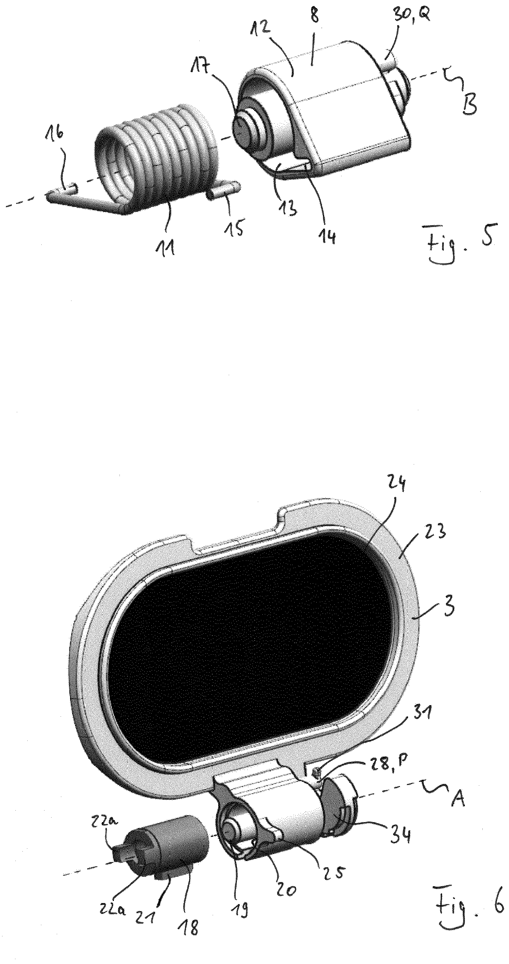

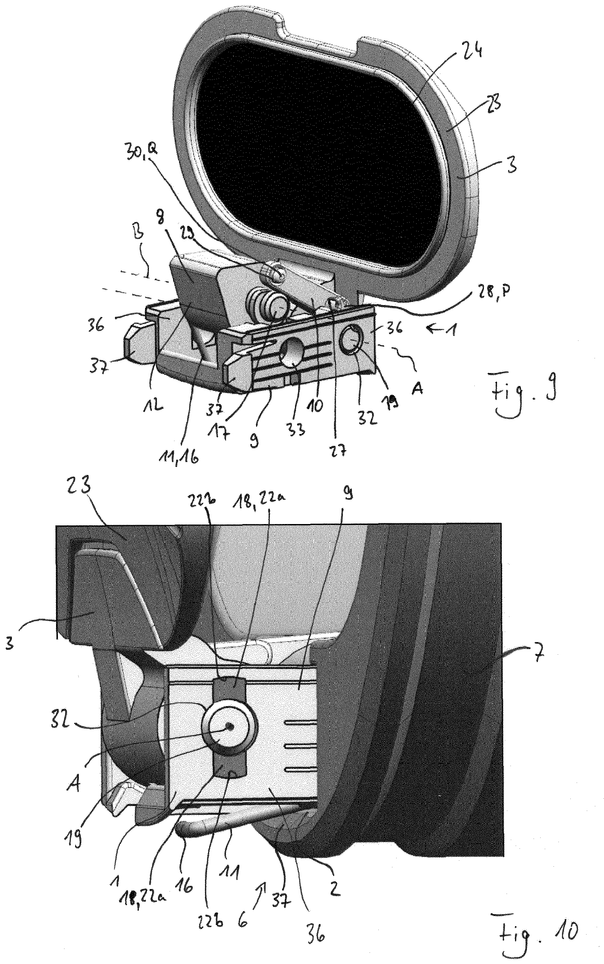

Fig. 1 depicts components of a flap assembly 1 in an exploded view according to an embodiment of the present disclosure. The flap assembly 1 may be received in a receptacle 2 to form a flap system 6, as shown in Fig. 2. Fig. 3 and 4 each show cross-sectional views of the assembled flap assembly 1, with the flap assembly being in an open end position (Fig. 3) and in a closed position (Fig. 4), respectively. Fig. 5 to 9 show various assembly steps for assembling the flap assembly 1. Fig. 10 is a detailed side-view as the flap assembly 1 is inserted into the receptacle 2, thereby forming the flap system 6.

Turning to Fig. 1 and referencing to Figs. 2 to 10, parts of the flap assembly 1 are explained in more detail. The flap assembly 1 comprises a flap 3 rotatable about a first axis A between the closed position (Fig. 3) and the open end position (Fig. 4). In this context, Fig. 1 depicts the flap 3 in its open end position.

The flap 3 may be used for example in a vehicle to cover in the closed position a tank filler and/or a charging terminal. In the closed position, the flap 3 may protect the tank filler and/or charging terminal against external influences, such as moisture or dirt. In the present embodiment, the flap 3 is particularly used to cover a direct current (DC) charging terminal 4, as becomes apparent from Fig. 2. In contrast to that, an alternating current (AC) charging terminal 5 is not provided with a flap 3. However, it is to be understood, that the AC charging terminal 5 may also be provided with a correspondingly configured flap 3.

For the purpose of covering the DC charging terminal 4, the flap assembly 1 is inserted into the receptacle 2, thereby forming a flap system 6 comprising the flap assembly 1 and the receptacle 2. In the present embodiment, the receptacle 2 is part of a frame 7 that accommodates the DC charging terminal 4 and the AC charging terminal 5.

The flap assembly 1 further comprises a toggle joint mechanism which comprises a body 8 rotatable about a second axis B extending in parallel to the first axis A. The flap 3 and the body 8 are accommodated in a base 9.

The toggle joint mechanism also comprises a transmission rod 10 which rotationally couples the body 8 with the flap 3. The toggle joint mechanism arrests the flap in its open end position, as will be described in more detail with regard to Figs. 3 and 4.

A spring 11 of the flap assembly 1 biases the toggle joint mechanism in the closed position. In other words, the body 8 is rotated against a spring force of the spring 11 as the flap 3 is rotated from the closed position into the open end position. In this context, a rotation of the flap 3 is transmitted to the body 8 by means of the transmission rod 10.

The spring 11 rotates the flap 3 into the closed position when a dead center of the toggle joint mechanism is overcome during a rotation of the flap 3 from the open end position into the closed position.

As can be best seen from Fig. 5, the spring 11 is formed as a torsional spring and may be accommodated in a housing 12 of the body 8. For this purpose, the body 8 comprises a hollow cylindrical section 13 having a seat 14 for a leg 15 of the spring 11. The other leg 16 of the spring 11 may rest at a ramp 37 formed in the receptacle 2, as will be described later with respect to Fig. 10. It is to be mentioned that the spring 11 may also be any other type of spring, as long as such kind of spring is capable of providing a torque onto the body 8.

The hollow cylindrical section 13 of the body 8 accommodates not only the spring 11 but also a part of a body shaft 17 defining the second axis B. In an assembled state, the spring 11 is arranged between an inner wall of the hollow cylindrical section 13 and an outer wall of the body shaft 17, in particular with a plurality of windings of the spring 11 being wound around the body shaft 17.

Upon overcoming the dead center of the toggle joint mechanism, the spring force of the spring 11 turns the flap 3 towards the closed position. The flap 3 may comprise a damping member 18 which is provided for damping a rotational movement of the flap 3. As can be best seen from Fig. 6, the damping member 18 surrounds a shaft 19 of the flap 3 defining the first rotation axis A and rotates about the first rotation axis A. In particular, the damping member 18 is arranged between an outer wall of the shaft 19 of the flap 3 and an inner wall of a hollow cylindrical portion 20 of the flap 3.

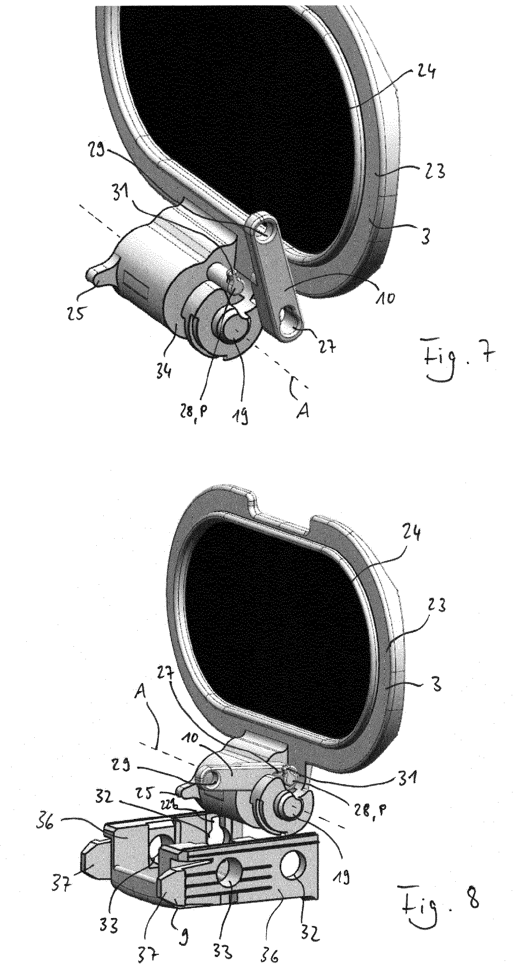

The damping member 18 comprises a radial portion 21 and an axial portion 22a, wherein in an assembled state of the flap assembly 1, the radial portion 21 extends radially from an outer wall of the damping member 18 with respect to the first axis A and the axial portion 22a extends axially from an axial end section of the damping member 18 with respect to the first axis. In an assembled state of the flap assembly 1, the radial portion 21 rests at the inner wall of the hollow cylindrical portion 20 of the flap 3, whereas the axial portion 22a rests at the base 9. As can be seen from Fig. 6 the damping member 18 comprises two axial portions 22a, which torque proof rest in two corresponding receiving cavities 22b provided at the base 9 (Fig. 8 and 10). The damping member 18 may comprise an elastomeric material, such as an elastomeric polymer, a silicone or an elastomeric rubber material.

Furthermore, for a silent stopping of the flap 3 in its end position 3, a covering part 23 of the flap 3 configured to cover the DC charging terminal 4 may comprise a soft pad 24 attached to the covering part 23 of the flap 3. The soft pad 24 may also serve as a seal which tightly seals the DC charging terminal 4 when the flap 3 is in its closed position. The soft pad 24 may be formed of an elastomeric material or a foamed material.

For a predetermined stopping of the flap 3 in the closed position, the flap 3 comprises a protrusion 25 which rests in the closed position at a stop 26. The protrusion 25 extends with respect to the first axis A radially away from an outer wall of the hollow cylindrical portion 20 of the flap 3, whereas the stop 26 is formed at the base 9 (Fig. 1 and 4). It is to be understood, that the protrusion 25 may be formed at another place than at the outer wall of the hollow cylindrical portion 20, for example at a section of the shaft 19 of the flap 3.

As can be best seen from Figs. 3 and 4, the transmission rod 10 is eccentrically hinged to the flap 3 with respect to the first axis A and is also eccentrically hinged to the body 8 with respect to the second axis B. For this purpose, the transmission rod 10 comprises a first mounting cavity 27 configured to receive a protrusion 28 formed at the flap 3 and a second mounting cavity 29 configured to receive a protrusion 30 formed at the body 8. The protrusion 28 formed at the flap 3 is aligned at least approximately parallel to the first axis A (Fig. 6), whereas the protrusion 30 formed at the body 8 is aligned at least approximately parallel to the second axis B (Fig. 5). The protrusion 28 formed at the flap 3 defines a pivot point P of the flap 3 and the protrusion 30 formed at the body 8 defines a pivot point Q of the body 8. During assembly of the flap assembly 1, the transmission rod 10 may be first snap-fitted onto the protrusion 30 of the body 8 and then snap-fitted onto the protrusion 28 of the flap 3. To this end, the second mounting cavity 29 may be circular shaped and the first mounting cavity 27 may form a hook (Fig. 3 and 4). It is to be understood that both mounting cavities 27, 29 may be circular shaped or may form a hook. Furthermore, it may also be envisaged that the first mounting cavity 27 may be circular shaped and the second mounting cavity 29 may form a hook.

According to another embodiment shown in Figs. 7 to 9, at least one of the mounting cavities 27, 29 may have a slope of a keyhole, in order to keep the transmission rod 10 securely hinged to at least one of the protrusions 28, 30. In the embodiment shown in Figs. 7 to 9, the first mounting cavity 27 has a slope of a keyhole. It is to be understood, that the second mounting cavity 29 may also have a slope of a keyhole. The keyhole shaped mounting cavity 27 is secured by a hook 31 extending radially from the protrusion 28 formed at the flap 3. Furthermore, one of the mounting cavities 27, 29 may form a hook and the corresponding other mounting cavity 29, 27 may have a slope of a keyhole.

With regard to Figs. 5 to 10 a method for assembling a flap system 6 comprising the flap assembly 1 is described. At first, the spring 11 is inserted into the hollow cylindrical section 13 of the body 8, with one leg 15 being received in the seat 14 formed in the hollow cylindrical section 13 of the body 8 (Fig. 5). Next, the damping member 18 is inserted into the hollow cylindrical portion 20 of the flap 3 (Fig. 6). In a subsequent step, the transmission rod 10 is connected to the flap 3, by snap-fitting the hook shaped second mounting cavity 29 onto the protrusion 28 formed at the flap 3 or by slipping the keyhole shaped second mounting cavity 29 over the hook 31 of the protrusion 28 formed at the flap 3 (Fig. 7). Subsequently, the flap 3 is snap-fitted into the provided base 9 by means of the shaft 19 of the flap 3, with the shaft 19 of the flap 3 being received by a bearing 32 formed at the base 9 (Fig. 8). It is to be understood, that the base 9 comprises elastically deflectable side walls 36 for snap-fitting the flap 3 to the base 9. After the flap 3 is snap-fitted into the base 9, the body 8 comprising the spring 11 is snap-fitted into the base 9 by means of the body shaft 17 being received by a bearing 33 formed at the base (Fig. 9). It is to be understood, that the body 8 may be snap-fitted into the base 9 before the flap 3. Next, the receptacle 2 is provided and the flap assembly 1 is inserted into the receptacle 2 by snap-fitting (Fig. 10). For this purpose, the base 9 comprises snapping means 37 which are snap-fitted into corresponding counter parts (not shown) formed at the receptacle 2. During the insertion of the flap assembly 1 into the receptacle 2 the spring 11 is biased. This is achieved as the leg 16 of the spring 11 which is not accommodated in the housing 12 of the body 8 extends out of the base 9 and the ramp 37 which is formed in the receptacle 2 and inclines in the inserting direction of the flap assembly 1. As the leg 16 encounters the ramp 37, the spring 11 is biased and the flap assembly 1 is ready to use. Furthermore, after insertion of the flap assembly 1 into the receptacle, the ramp 37 forms an abutment for the leg 16 of the spring 11, such that the flap assembly 1 securely rests in the receptacle 2.

Now turning to Figs. 3 and 4, the functionality of the assembled flap assembly 1 will be described in more detail.

As becomes apparent from Fig. 3, in the open end position of the flap 3, the pivot point P of the flap 3 is arranged on one side of a plane E comprising the first axis A and the second axis B, and the pivot point Q of the body 8 is arranged on the other side of that plane E. When the pivot point P of the flap 3 and the pivot point Q of the body 8 are on different sides of the plane E, the flap 3 has overcome the dead center of the toggle joint mechanism and is arrested in the open end position. As can be also seen from Fig. 3, the transmission rod 10 intersects the first axis A of the flap 3 in the open end position. For this purpose, the shaft 19 of the flap 3 comprises a recess 34 for accommodating a part of the transmission rod 10, as can be best seen in Fig. 8. Furthermore, Fig. 3 shows that first axis A extends through the recess 34. The recess 34 is in a plane that is arranged at least approximately perpendicular to the first axis A. Furthermore, is to be mentioned that the recess 34 also serves for guiding the transmission rod 10 during a rotation of the flap 3.

Upon moving the flap 3 from the open end position towards the closed position, the pivot point P of the flap 3 is brought on the same side of the plane E as the pivot point Q of the body 8 and the flap 3 overcomes the dead center of the toggle joint mechanism. As the dead center of the toggle joint mechanism is overcome, the torque of the biased spring 11 rotates the flap 3 into the closed position (Fig. 4). It is to be noted that a rotation of the flap 3 and the rotation of the body 8 between the open end position and the closed position are in the same sense after the dead center has overcome.

### Reference numeral list

- 1: flap assembly
- 2: receptacle
- 3: flap
- 4: direct current charging terminal
- 5: alternating current charging terminal
- 6: flap system
- 7: frame
- 8: body
- 9: base
- 10: transmission rod
- 11: spring
- 12: housing
- 13: hollow cylindrical section
- 14: seat
- 15: leg
- 16: leg
- 17: body shaft
- 18: damping member
- 19: shaft
- 20: hollow cylindrical portion
- 21: radial portion
- 22a: axial portion
- 22b: receiving cavity
- 23: covering part
- 24: pad
- 25: protrusion
- 26: stop
- 27: first mounting cavity
- 28: protrusion
- 29: second mounting cavity
- 30: protrusion
- 31: hook
- 32: bearing
- 33: bearing
- 34: recess
- 36: side wall
- 37: ramp

- A: first axis
- B: second axis
- E: plane
- P: pivot point of 3
- Q: pivot point of 8

## Claims

1. Flap assembly (1), comprising:
a flap (3) rotatable about a first axis (A) between a closed position and an open end position,
a toggle joint mechanism comprising a body (8) rotatable about a second axis (B) which is parallel to the first axis (A), and a transmission rod (10) rotationally coupling the body (8) and the flap (3), and
a spring (11) biasing the toggle joint mechanism in the closed position,
wherein the toggle joint mechanism arrests the flap (3) in its open end position.

2. Flap assembly (1) according to claim 1, wherein
the transmission rod (10) is eccentrically hinged to the flap (3) with respect to the first axis (A) and is eccentrically hinged to the body (8) with respect to the second axis (B).

3. Flap assembly (1) according to claim 1 or 2, wherein
the transmission rod (10) intersects the first axis (A) when the flap (3) is rotated from the closed position into its open end position.

4. Flap assembly (1) according to at least one of the preceding claims, wherein
the flap (3) comprises a shaft (19) defining the first axis (A), with the shaft (19) of the flap (3) comprising a recess (34) for accommodating a part of the transmission rod (10) and with the first axis (A) extending through the recess (34).

5. Flap assembly (1) according to at least one of the preceding claims, wherein
the body (8) comprises a housing (12) accommodating the spring (11), in particular a hollow cylindrical section (13) having a seat (14) for a leg (15) of the spring (11).

6. Flap assembly (1) according to at least one of the preceding claims, wherein
a damping member (18) is provided for damping a rotational movement of the flap (3), with the damping member (18) in particular surrounding a shaft (19) of the flap (3).

7. Flap assembly (1) according to at least one of the preceding claims, wherein
the flap (3) comprises a protrusion (25) for stopping the flap (3) in its closed position, with the protrusion (25) resting at a stop (26) when the flap (3) is in its closed position.

8. Flap assembly (1) according to at least one of the preceding claims, wherein
the transmission rod (10) comprises a first mounting cavity (27) configured to receive a protrusion (28) formed at the flap (3) and a second mounting cavity (29) configured to receive a protrusion (30) formed at the body (8).

9. Flap assembly (1) according to claim 8, wherein
at least one of the first mounting cavity (27) and the second mounting cavity (29) forms a hook or has a slope of a keyhole.

10. Flap assembly (1) according to at least one of the preceding claims, wherein
the flap (3) and the body (8) are snap-fitted into a base (9).

11. Flap assembly (1) according to at least one of the preceding claims, wherein
the transmission rod (10) is snap-fitted onto the flap (3) and/or the body (8).

12. Flap system (6) comprising a flap assembly (1) according to at least one of the preceding claims and a receptacle (2) configured to receive the flap assembly (3), wherein the spring (11) is biased upon inserting, in particular snap-fitting, the flap assembly (1) into the receptacle (2), in particular with the receptacle (2) comprising a ramp (37) for receiving a leg (16) of the spring (11) as the flap assembly (1) is inserted into the receptacle (2).

13. Method for assembling a flap system (6) comprising a flap assembly (1) according to at least one of claims 1 to 11, the method comprising the steps of:
- providing a base (9) of the flap assembly (1),
- snap-fitting a flap (3) rotatable about a first axis (A) between a closed position and an open end position into the base (9),
- connecting a spring (11) to a body (8) rotatable about a second axis (B),
- snap-fitting the body (8) comprising the spring (11) into the base (9).

14. Method according to claim 13, wherein the method further comprises the steps of:
- providing a receptacle (2) configured to receive the flap assembly (1),
- inserting, in particular snap-fitting, the flap assembly (1) into the receptacle (2), thereby biasing the spring (11) such that the spring (11) biases the flap (3) in the closed position.
